# EUROPEAN PATENT SPECIFICATION

(11) **EP 3 437 904 B1**
(45) Date of publication and mention of the grant of the patent: **17.03.2021**
(21) Application number: 18187292.0
(22) Date of filing: 03.08.2018
(51) Int. Cl.: B60H 1/00, F25B 45/00

(54) **APPARATUS AND METHOD FOR LOCKING A STORAGE TANK ABOVE A SCALE DURING TRANSPORTATION**
VORRICHTUNG UND VERFAHREN ZUM VERRIEGELN EINES LAGERTANKS ÜBER EINER WAAGE WÄHREND DES TRANSPORTS
APPAREIL ET PROCÉDÉ DE VERROUILLAGE D'UN RÉSERVOIR DE STOCKAGE AU-DESSUS D'UNE ÉCHELLE PENDANT LE TRANSPORT

(30) Priority: 04.08.2017 IT 201700090844; 21.11.2017 US 201715820058
(43) Date of publication of application: 06.02.2019
(73) Proprietor: Snap-on Incorporated, Kenosha, WI 53141 (US)
(72) Inventor: Govekar, Craig, Gurnee, IL Illinois 60031 (US); Sanhaji, Rahhali, 50019 Sesto Fiorentino (IT)
(74) Representative: Hylarides, Paul Jacques

(56) References cited:
- DE-U1-202006 001 376
- US-A- 4 878 356
- US-A- 6 119 475
- US-A1- 2014 144 714

## Description

### BACKGROUND

The invention relates to an apparatus in accordance with the preamble of claim 1. Such an apparatus is disclosed in US 2014/144714 A1. Many vehicles come equipped with systems that utilize refrigerants, such as air conditioning systems, for example. The refrigerant (1,1,1,2-tetrafluoroethane - R-134a, for example) contained within such systems may need to be supplemented, recycled, or removed on occasion. In order to remove or add the refrigerant, refrigerant recovery and delivery units can be used. To meet certain recovery standards, or to add refrigerant, such refrigerant recovery and delivery units can measure an amount of refrigerant that has been removed from or added to a vehicle.

Refrigerant recovery and delivery units can be equipped with a storage tank for storing refrigerant. In order to determine the amount of refrigerant that has been removed from or added to the vehicle, the storage tank and any contents thereof may be weighed to determine the mass of refrigerant within the storage tank using a scale system that measure the weight of the storage tank and its contents. In some cases, the storage tanks and scale systems can be prone to vibration or movement during transportation of the refrigerant recovery and delivery unit from one location to another. In addition, if the vehicle transporting the storage tank and scale system within the refrigerant recovery and delivery system encounters a bumpy ride, the storage tank and scale system can be jostled or experience jolts. These conditions can lead to damage inflicted on the scale system. For example, under these conditions, the storage tank can impact a load cell within the scale system, thereby damaging the load cell.

Accordingly, it would be desirable to provide a system that helps to prevent damage to the scale system when the refrigerant recovery and delivery unit is being transported from one location to another.

### SUMMARY

According to the present invention an apparatus in accordance with claim 1 is provided. The present invention provides an apparatus for lifting a storage tank of a refrigerant recovery and delivery unit above and out of contact with a scale system, to prevent damage to the scale system from vibration, movement, jostling, or jolting, that may occur during transportation of the refrigerant recovery and delivery unit from one location to another. A hand-operated cam element may be used to move a lever from a normally unlocked position where the storage tank is in contact with the scale system, to a locked position where an end of the lever exerts a force on a bottom of the storage tank to move the storage tank into a locked position where the storage tank is positioned above, and out of contact with, the scale system. In this manner, the scale system is not subject to damage during transportation of the refrigerant recovery and delivery unit from one location to another when in the locked position out of contact with the scale system.

The present invention further provides for a method of lifting a storage tank of a refrigerant recovery and delivery unit above and out of contact with a scale system, to prevent damage to the scale system from vibration, movement, jostling, or jolting, that may occur during transportation of the refrigerant recovery and delivery unit from one location to another. The method may include turning a hand-operated cam element to move a lever from a normally unlocked position where the storage tank is in contact with the scale system, to a locked position where an end of the lever exerts a force on a bottom of the storage tank to move the storage tank into a locked position where the storage tank is positioned above, and out of contact with, the scale system. In this manner, the method provides that the scale system is not subject to damage during transportation of the refrigerant recovery and delivery unit from one location to another when it has been moved to the locked position with the storage tank out of contact with the scale system.

In one aspect, a refrigerant recovery and delivery unit is provided having a storage tank, a frame positioned at least partially beneath the storage tank, a lever having a first end and a second end pivotally mounted to the frame, a scale system positioned beneath the storage tank, wherein in a first position, the storage tank exerts a force against the scale system, and in a second position, the second end of the lever exerts a force on a bottom of the storage tank such that the storage tank is positioned above, and out of contact with, the scale system.

In another aspect, a refrigerant recovery and delivery unit is provided having a storage tank, a frame positioned at least partially beneath the storage tank, a scale system positioned beneath the storage tank, means for moving the storage tank from a first position where the storage tank exerts a force against the scale system to a second position where the storage tank is positioned above, and out of contact with, the scale system.

Viewed from another aspect, an example embodiment takes the form of a method. The method includes steps of (i) providing a storage tank, a frame positioned at least partially beneath the storage tank, a scale system positioned beneath the storage tank, and means for moving the storage tank from a first position where the storage tank exerts a force against the scale system to a second position where the storage tank is positioned above, and out of contact with, the scale system; and (ii) moving the storage tank from the first position wherein the storage tank exerts a force on the scale system to the second position where the storage tank is positioned above, and out of contact with, the scale system.

These as well as other aspects and advantages will become apparent to those of ordinary skill in the art by reading the following detailed description, with reference to the accompanying drawings. Further, it should be understood that the embodiments described in this overview and elsewhere are intended to be examples only and do not necessarily limit the scope of the invention as defined by the claims.

### BRIEF DESCRIPTION OF THE DRAWINGS

Example embodiments are described herein with reference to the following drawings.
Figure 1 is a partial cut-away perspective view of refrigerant recovery and delivery unit 50 having a storage tank positioned on top of a scale system.
Figure 2 is a perspective view of refrigerant recovery and delivery unit 100, according to an example embodiment.
Figure 3 is a perspective view of refrigerant recovery and delivery unit 100 shown in Figure 2 having a handle 110 movable from moving a storage tank within from an unlocked to a locked position, with the handle shown in the locked position, according to an example embodiment.
Figure 4A is a close up perspective view of refrigerant recovery and delivery unit 100 shown in Figures 2 and 3 shown with the handle 110 in an unlocked position, according to an example embodiment.
Figure 4B is a close up perspective view of refrigerant recovery and delivery unit 100 shown in Figures 2 and 3 with handle 110 shown in a locked position, according to an example embodiment.
Figure 5 is an exploded view of the components of the refrigerant recovery and delivery unit 100 shown in Figures 2-4B.
Figure 6 is a cut-away view of a portion of refrigerant recovery and delivery unit 100 shown in Figures 2-5, shown with lever 150 in a locked position, according to an example embodiment.
Figure 7 is a cut-away view of a portion of refrigerant recovery and delivery unit 100 shown in Figures 2-5, shown with lever 150 in an unlocked position, according to an example embodiment.
Figure 8A is a bottom view of tank 160, lever 150, and frame 170 of refrigerant recovery and delivery unit 100 shown in Figures 2-7, shown with lever 150 in an unlocked position.
Figure 8B is a cut-away side view of tank 160, lever 150 and frame 170 of refrigerant recovery and delivery unit 100 shown in Figure 8A.
Figure 8C is a cut-away perspective view of tank 160, lever 150, and frame 170 of refrigerant recovery and delivery unit 100 shown in Figures 8A and 8B.
Figure 9A is a close up, cutaway, perspective view of tank 160, lever 150, and frame 170, with the lever 150 shown in an unlocked position, with the tank 160 positioned on scale system 180.
Figure 9B is a close up, cutaway, perspective view of tank 160, lever 150, and frame 170, with the lever 150 shown in a locked position, with the tank 160 positioned above, and out of contact with, scale system 180.

### DETAILED DESCRIPTION

In this description, the articles "a," "an," and "the" are used to introduce elements and/or functions of the example embodiments. The intent of using those articles is that there is one or more of the introduced elements and/or functions. In this description, the intent of using the term "and/or" within a list of at least two elements or functions and the intent of using the terms "at least one of' and "one or more of' immediately preceding a list of at least two elements or functions is to cover each embodiment including a listed element or function independently and each embodiment comprising a combination of the listed elements or functions. For example, an embodiment described as comprising "A, B, and/or C," or "at least one of A, B, and C," or "one or more of A, B, and C" is intended to cover each of the following possible embodiments: (i) an embodiment comprising A, but not B and C, (ii) an embodiment comprising B, but not A and C, (iii) an embodiment comprising C, but not A and B, (iv) an embodiment comprising A and B, but not C, (v) an embodiment comprising A and C, but not B, (v) an embodiment comprising B and C, but not A, and (vi) an embodiment comprising A, B, and C. For the embodiments comprising element or function A, the embodiments can comprise one A or multiple A. For the embodiments comprising element or function B, the embodiments can comprise one B or multiple B. For the embodiments comprising element or function C, the embodiments can comprise one C or multiple C. In this description, the use of ordinal numbers such as "first," "second," "third" and so on is to distinguish respective elements rather than to denote a particular order of those elements unless the context of using those terms explicitly indicates otherwise.

The diagrams, flow charts, and data shown in the figures are provided merely as examples and are not intended to be limiting. Many of the elements illustrated in the figures and/or described herein are functional elements that can be implemented as discrete or distributed elements, individually or in conjunction with other element(s), and in any suitable combination and/or location. Those skilled in the art will appreciate that other arrangements and elements can be used instead. Furthermore, the functions described as being performed by one or more elements can be carried out by a combination of hardware, firmware, and/or software *(e.g.,* a processor that executes computer-readable program instructions).

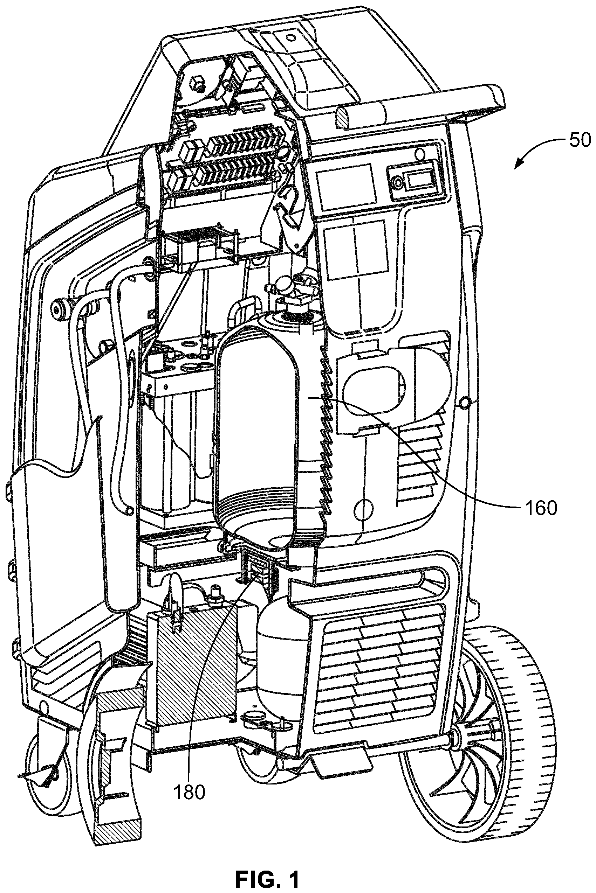

Figure 1 is a partially cut-away perspective view showing an apparatus 50, which in some embodiments may be a refrigerant recovery and delivery unit. In this embodiment, storage tank 160 is positioned within the refrigerant recovery and delivery unit 50. The apparatus 50 can be configured to weigh a storage tank 160 and contents thereof, using a scale system 180, which may be a load cell, although other types of scales may also be used.

In some cases, the storage tank 160 and scale system 180 can be prone to vibration or movement during transportation of the refrigerant recovery and delivery unit from one location to another. In addition, if the vehicle transporting the storage tank and scale system within the refrigerant recovery and delivery system encounters a bumpy ride, the storage tank and scale system can be jostled or experience jolts. These conditions can lead to damage inflicted on the scale system. For example, under these conditions, the storage tank can impact a load cell within the scale system, thereby damaging the load cell.

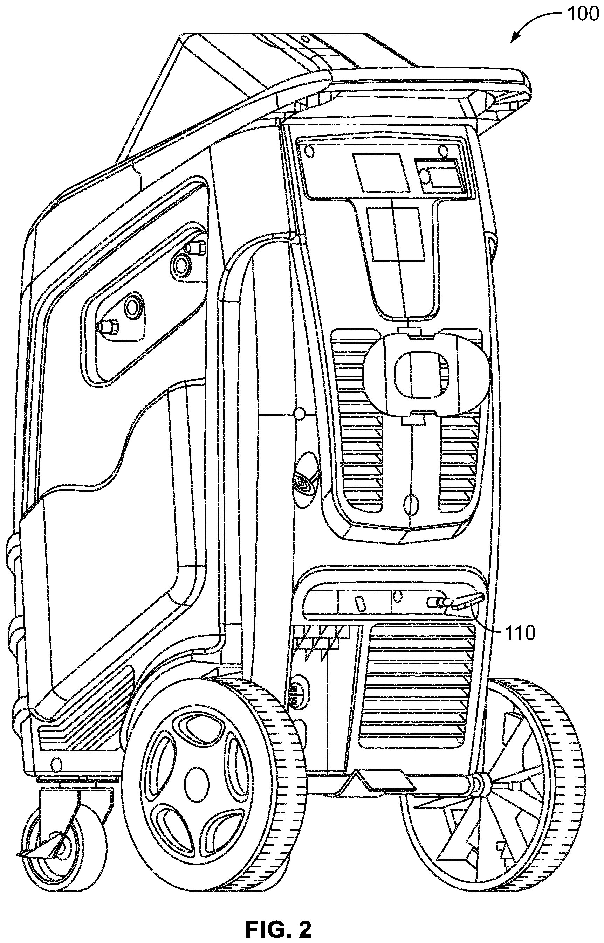

Figure 2 is a perspective view of refrigerant recovery and delivery unit 100. In this embodiment, an external handle 110 is provided. Upon rotation of the handle 110, a mechanism is used to move the storage tank within from an unlocked position in which the storage tank exerts a force on a scale system, to a locked position in which the storage tank is moved above, and out of contact with, the scale system. In this manner, during transportation when the refrigerant recovery and delivery unit 100 experiences a bumpy ride, vibration, jostling, and/or jolting, etc., with the storage tank 160 in the locked position, the storage tank 160 is positioned above, and out of contact with, the scale system 180, thereby preventing damage to the scale system 180 during transportation.

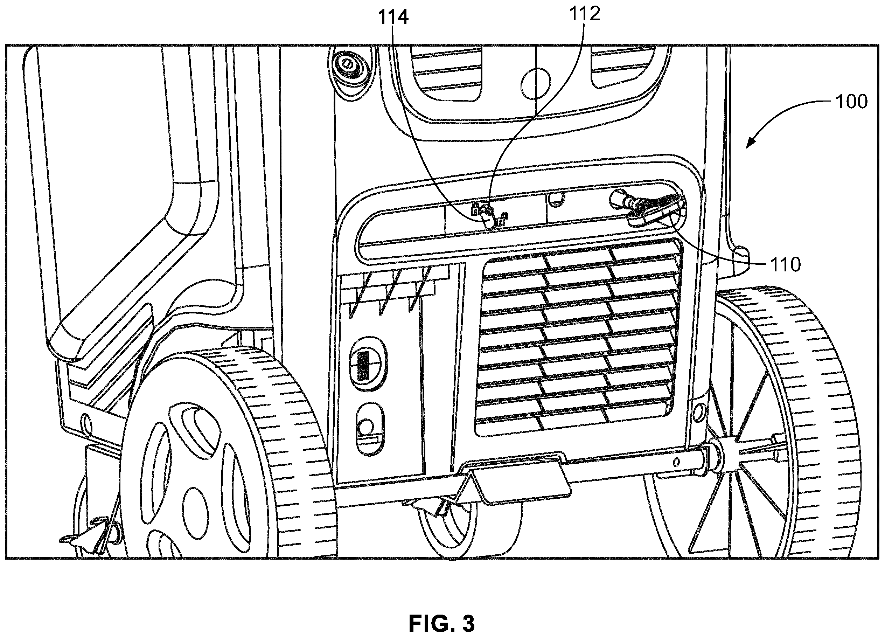

Figure 3 is a close-up perspective view of the refrigerant recovery and delivery unit 100 shown in Figure 2. In Figure 3, the handle 110 is shown in the locked position. An indicator 112 extends through a slot 114 to provide an indication as to whether the storage tank within is in the locked position, with the storage tank positioned above, and out of contact with, the scale system, during transportation, or in the unlocked position with the storage tank exerting a force against the scale system during normal operation, and not during transport.

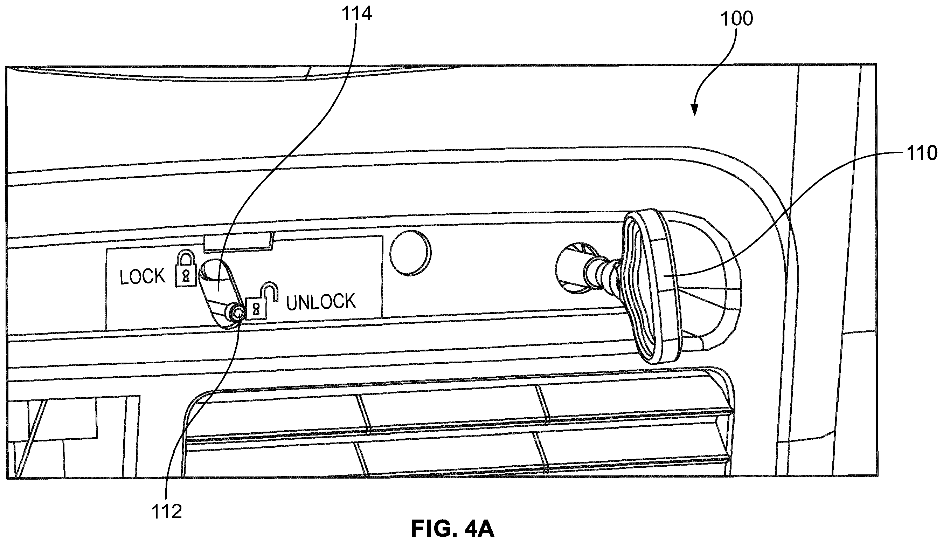

Figure 4A is a close-up view of refrigerant recovery and delivery unit 100 shown with handle 110 in the unlocked position. Indicator 112 extends through slot 114 indicating that the handle 110 and storage tank within is in the unlocked position with the storage tank exerting a force against the scale system, during normal operation, and not during transport.

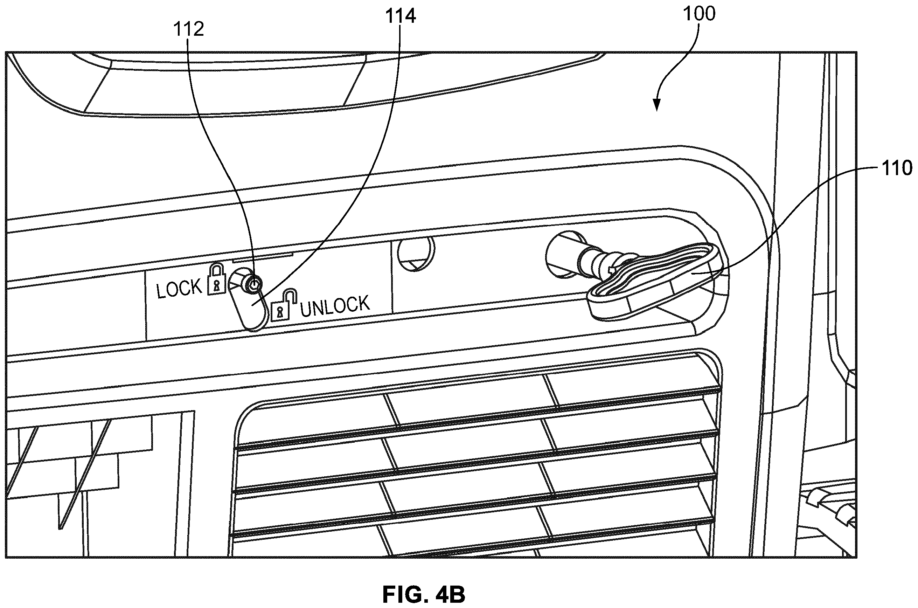

Figure 4B is a close-up view of refrigerant recovery and delivery unit 100 after handle 110 has been moved 90 degrees such that the storage tank is positioned in the locked position, above, and out of contact with, the scale system. In Figure 4B, the indicator 112 extends through slot 114 to indicate that the handle 110 and storage tank within is in the locked positioned. In other embodiments, the handle 110 may be turned less than, or more than 90 degrees to move from an unlocked position to a locked position, or vice versa.

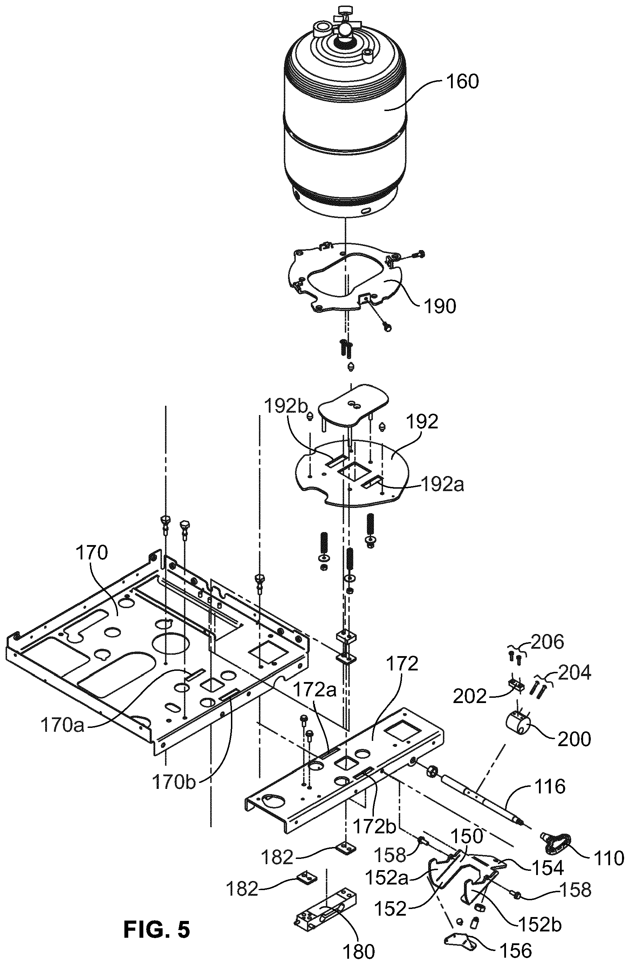

Figure 5 is an exploded view of the internal components of refrigerant recovery and delivery unit 100 shown in Figures 2-4B. The internal components include storage tank 160. In some embodiments, the storage tank 160 can be configured to store refrigerant, such as refrigerant used in air-conditioning systems in vehicles (e.g., industry standard refrigerants like dichlorodifluoromethane - R-12, chlorodifluoromethane - R-22, 1,1,1,2-tetrafluoroethane - R-134a, etc.), in some embodiments. The refrigerant stored within the storage tank 160 can be a liquid, a gas, or a combination of the two, in various embodiments. In one example embodiment, the storage tank 160 has a 30 lb. (13.6 kg) rated refrigerant capacity. The storage tank 160, when empty, can have a weight between 15-17 lb. (6.8-7.7 kg) In another example embodiment, the storage tank 160 has a 50 lb. (22.7 kg) rated refrigerant capacity and an empty weight between 28-32 lb. (12.7-14.5 kg). Various other storage tank 160 sizes and capacities are possible *(e.g.,* 24 lb., 10.9 kg, rated refrigerant capacity storage tank 160). In other embodiments, the storage tank 160 may store gas and/or liquid other than a refrigerant.

The refrigerant within the storage tank 160 can be stored during a refrigerant recovery process, a refrigerant recycling process, or a refrigerant reintroduction process, in various embodiments. Further, the refrigerant recovery process, recycling process, or reintroduction process can include multiple phases or stages *(e.g.,* one phase that withdraws refrigerant from, or adds refrigerant to, a vehicle using a compressor and a second phase that withdraws refrigerant from a vehicle using a compressor aided by a vacuum pump). In addition, the storage tank 160 may also store refrigerant when not in use with respect to a vehicle.

A tank plate 190 is positioned beneath the bottom of the storage tank 160 and may be secured to the bottom of the storage tank via clips, set screws, strap(s), etc.. A base plate 192 is positioned beneath the tank plate 190. The storage tank 160, tank plate 190, and base plate 192 are positioned above frame 170 which includes a frame reinforcement 172. A scale system 180 in the form of a load cell is positioned within the frame 170, and scale spacers 182 are also shown.

A handle 110 is attached to a lever shaft 116, which is in turn attached to cam 200 via pair of fasteners 204. A cam stop 202 is attached to cam 200 via fasteners 206. A lever 150 is also mounted for engagement with cam 200 and/or cam stop 202 of lever shaft 116. The lever 150 includes a first end 152 having upwardly extending flanges 152a and 152b that extend through slots 172a and 172b of frame reinforcement 172, as well as through slots 192a and 192b in base plate 192, and through slots 170a and 170b in frame 170. The upwardly extending flanges 152a and 152b on lever 150 engage a bottom of tank plate 190 when the handle 110 and lever shaft 116 are rotated, to lift storage tank 160 above, and out of contact with, scale system 180 when the storage tank is moved to the locked position. The lever 150 also includes a second end 154 which engages cam 200 and/or cam stop 202 when cam 200 is rotated by handle 110 and lever shaft 116. An end position magnet 156 is also provided to maintain the lever 150 in a desired unlocked position, and prevent an unwanted movement of the lever 150 when in the unlocked position. Pivot bolts 158 are used to pivotally mount lever 150 with frame enforcement 172. A single bolt could also be used.

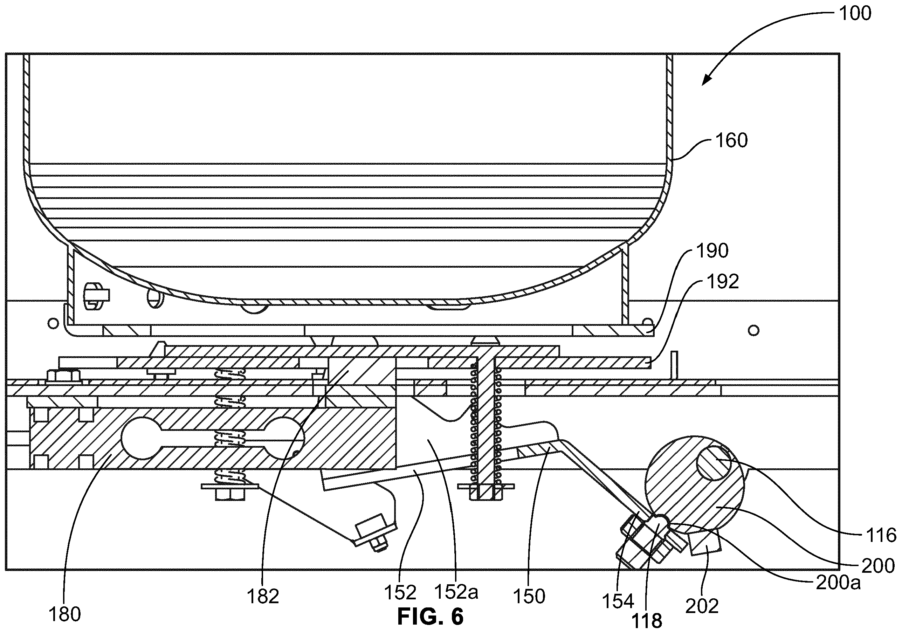

Figure 6 is a sectional view of refrigerant recovery and delivery unit 100 shown in Figures 2-5. In Figure 6, the storage tank 160 is shown in the locked position with the tank plate 190 and storage tank 160 positioned above, and out of contact with, base plate 192, scale system spacer 182 and scale system 180. Scale system spacer 182 can be made of steel coated with zinc, in some embodiments. Alternatively, the scale system spacer 182 could be made of rubber or another cushioned material. In Figure 6, cam 200 has been rotated into engagement with an upper surface of second end 154 of lever 150. To lock the cam 200 into proper position, cam 200 includes a recess 200a into which a detent 118 extending through second end 154 of lever 150 extends. In this position, the cam 200 exerts a force against the upper surface of second end 154 of lever 150 thereby upwardly moving first end 152 of lever 150. Upwardly extending flange 152a and 152b exert an upward force against the bottom of tank plate 190, and in turn the bottom of storage tank 160, to position the storage tank 160 and tank plate 190 above, and out of contact with, base plate 192, scale system spacer 182 and scale system 180. In this embodiment, the cam is secured to lever shaft 116 in an offset manner, such that cam 200, when rotated, exerts a force against the upper surface of the second end 154 of lever 150 to pivotally move lever 150. Further, in this embodiment the cam is shown with a generally circular cross section attached to the lever shaft 116 in an offset manner; however, in other embodiments, the cam 200 may have a different cross-section such as elliptical, parabolic, egg-shaped, etc. and may be secured to lever shaft 116 in a non-offset (or offset) manner. Cam 200 also is shown having a cam stop 202 that engages an outer end of the second end 154 of lever 150 to prevent further rotation of the cam 200, once it is in the locked position with detent 118 positioned within recess 200a of cam 200.

As noted above, in some embodiments scale system 180 may be a load cell, while in other embodiments the scale system could be a different type of scale such as a spring scale. When a load cell is used for scale system 180, the load cell is configured to measure force acting on the load cell. This force may be output as an electrical signal, in some embodiments. The electrical signal could be sent to a processing device or a control system, for example. Alternatively or additionally, the force could be output to a display for viewing by a user of the refrigerant recovery and delivery unit 100. The force measured by the load cell could correspond to the weight applied to the load cell by the storage tank 160 and contents therein. After accounting for the weight of an empty storage tank, the force measured by the load cell can correspond to the amount (weight) of refrigerant in the storage tank 160.

Various types of load cells may be used for scale system 180. Some example load cells include strain gauge load cells (*e.g.,* shear beam load cells, double-ended shear beam load cells, or compression load cells), hydraulic load cells, and pneumatic load cells. The load cell can be a transducer in multiple embodiments, whereby a voltage or a current output signal indicates a value of a corresponding force acting on the load cell..

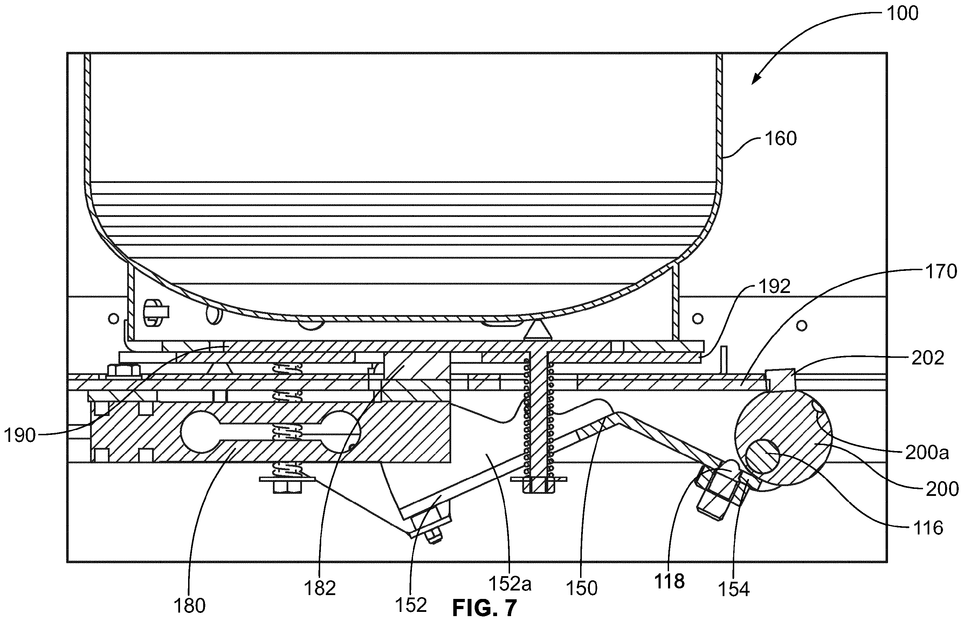

Figure 7 is a sectional view of refrigerant recovery and delivery unit 100 shown in Figures 2-6. In Figure 7, the storage tank 160 is shown in the unlocked position with the tank plate 190 in contact with base plate 192, and exerting a force on scale system spacer 182 and scale system 180. Thus, in the unlocked position shown in Figure 7, the scale system 180 can determine the weight of storage tank 160 and the contents thereof. The cam 200 has been rotated 90 degrees such that the detent 118 extending through second end 154 of lever 150 is no longer positioned within recess 200a on cam 200. Further upwardly extending flanges 152a and 152b attached to first end 152 of lever 150 have moved downwardly and out of contact with tank plate 190. In addition, cam stop 202 positioned on cam 200 abuts an outer end of frame 170 to prevent further rotation of cam 200, to insure cam 200 is in a desired position in this unlocked position.

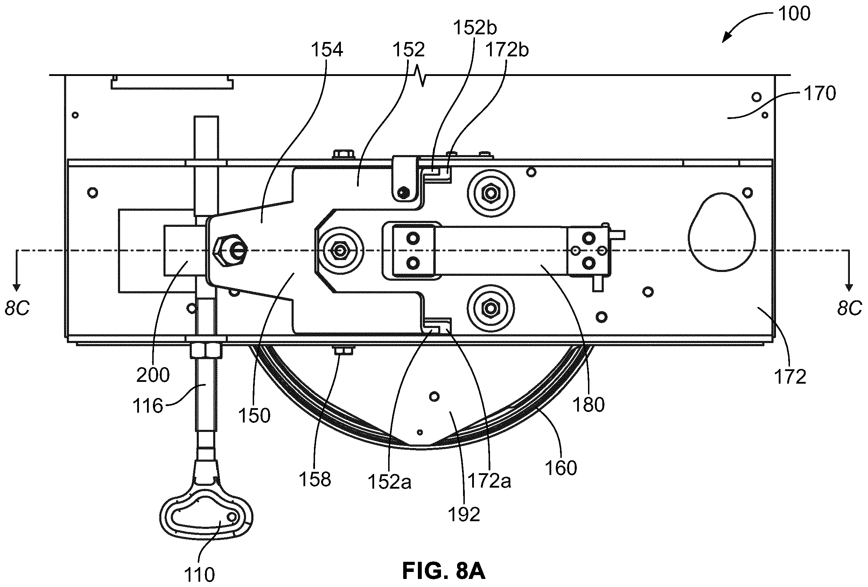

Figure 8A is a bottom view of refrigerant recovery and delivery unit 100. Handle 110 and lever shaft 116 are shown extending through frame reinforcement 172 of frame 170, and cam 200 is shown secured to lever shaft 116. Lever 150 having a second end 154 and a first end 152 is shown pivotally mounted to frame reinforcement 172 of frame 170 with pivot bolt 158. Upwardly extending flanges 152a and 152b are shown extending through slots 172a and 172b of frame reinforcement 172, respectively. Slots 172a and 172b allow for movement of upwardly extending flanges 152a and 152b from an unlocked to a locked position, and vice versa. Storage tank 160 is shown extending above base plate 192. Scale system 180 shown as a load cell is shown positioned within frame reinforcement 172 of frame 170.

In some embodiments cam stop 202 may comprise a cam plate that when in the locked position extends over a top surface of second end 154 of lever 150 and exerts a force on the top surface of second end 154 to move the upwardly extending flanges 152a and 152b on first end 152 of lever 150 into engagement with tank plate 190 to move the tank plate 190 and storage tank 160 above, and out of contact with, base plate 192 and scale system 180.

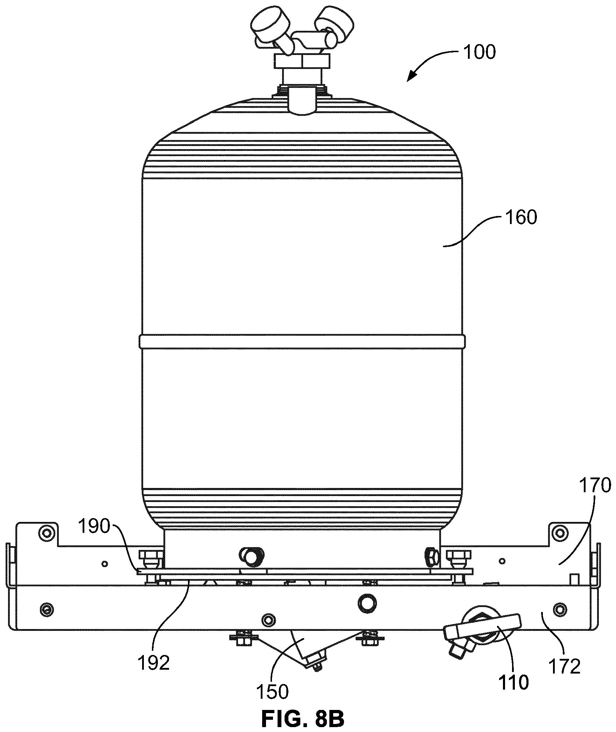

Figure 8B is a side view of refrigerant recovery and delivery unit 100 with storage tank 160 positioned above frame 170 and frame reinforcement 172. In Figure 8B handle 110 is shown in an unlocked position such that lever 150 does not exert an upward force against tank plate 190, and tank plate 190 is in contact with base plate 192 and exerts a force on scale system 180..

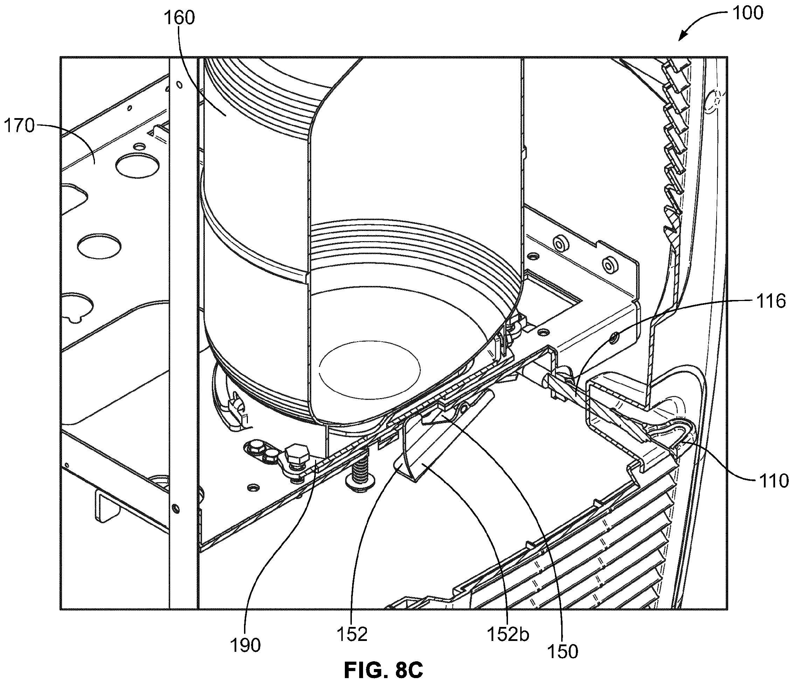

Figure 8C is a perspective cutaway view of refrigerant recovery and delivery unit 100 with storage tank 160 positioned above frame 170 and secured to tank plate 190. In Figure 8C, handle 110 is shown in the unlocked position such that upwardly extends flanges 152a and 152b extending from first end 152 of lever 150 do not exert an upward force on the tank plate 190.

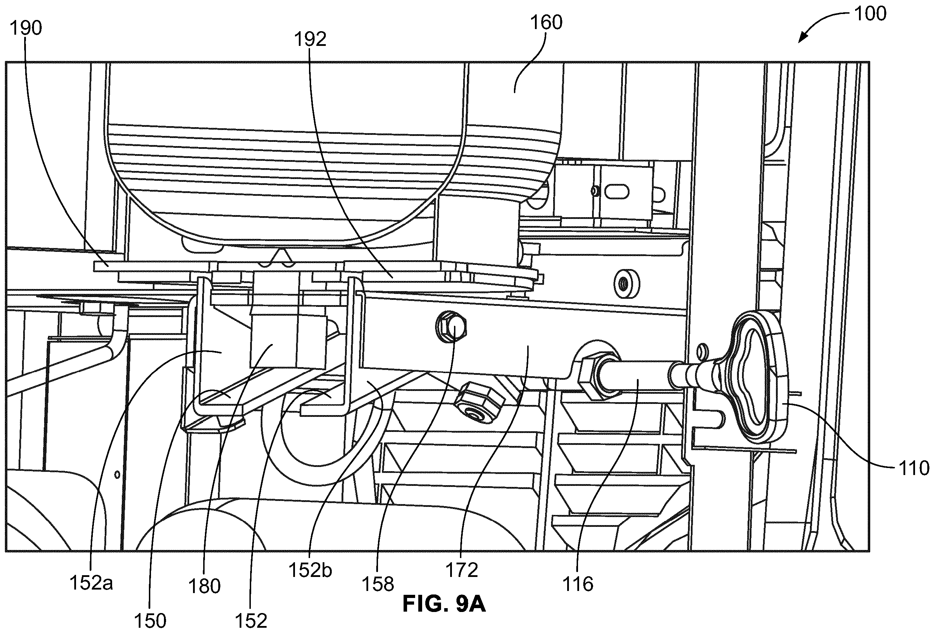

Figure 9A is a perspective cutaway view of refrigerant recovery and delivery unit 100, shown with handle 110 and lever shaft 116 in an unlocked position with storage tank 160 secured to tank plate 190, which is in contact with base plate 192 and exerts a force on scale system 180. Upwardly extending flanges 152a and 152b extending from first end 152 of lever 150 are out of contact with the tank plate 190. In addition, lever 150 is pivotally mounted to frame reinforcement 172 via pivot bolt 158.

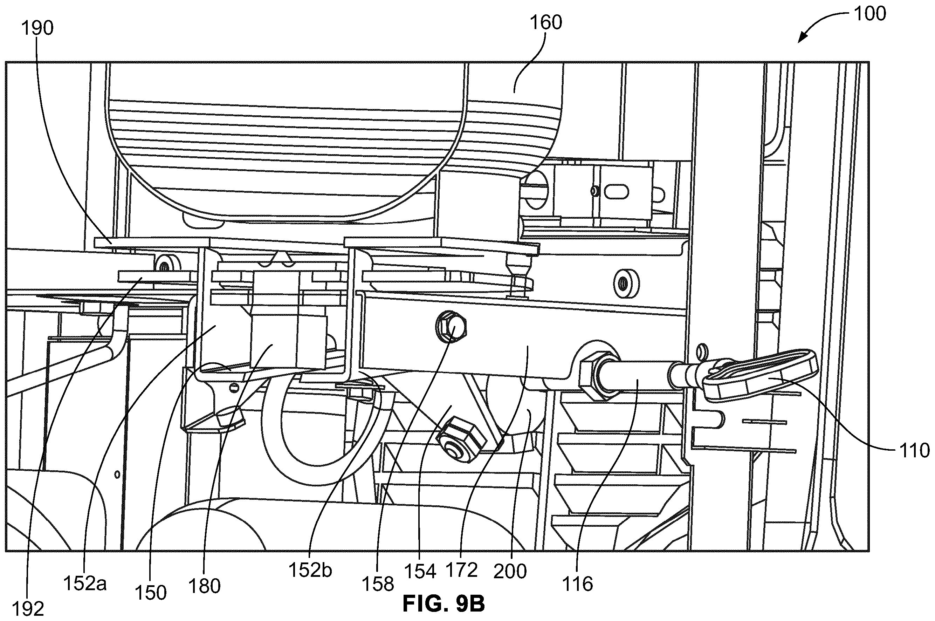

Figure 9B is a perspective cutaway view of refrigerant recovery and delivery unit 100 shown with handle 110 and lever shaft 116 in a locked position with storage tank 160 and tank plate 190 positioned above, and out of contact with, base plate 192 such that storage tank 160 and tank plate 190 do not exert a force on scale system 180. In this locked position, cam 200 exerts a force on a top surface of second end 154 of lever 150, which pivots about pivot bolt 158 positioned in frame reinforcement 172 such that flanges 152a and 152b extending from first end 152 of lever 150 exert a force on the bottom of tank plate 190, and in turn storage tank 160, such that tank plate 190 and storage tank 160 are positioned above, and out of contact with, base plate 192, and do not exert a force on scale system 180.

It will be appreciated that in some embodiments tank plate 190 is not required, and the first side 150 of the lever could exert a force directly on the bottom of storage tank 160, or a reinforced bottom of storage tank 160. In addition, in some embodiments, the lever 150 may include additional upwardly extending flanges like 152a and 152b, may include only a single flange like 152a and 152b, or may include no upwardly extending flanges at all.

Furthermore, other means not falling within the scope of the claims may be used to raise the storage tank above, and out of contact with, the scale system 180. For example, a linear or rotary actuator, rack and pinion system, or cylinder may be used to exert a force on the bottom of storage tank 160 to move into a position above, and out of contact with, the scale system 180. Alternately, a pulley system may be employed that is secured to the top of the storage tank 160 to lift the tank above, and out of contact with, the scale system 180. Moreover, in some embodiments a base plate 192 may not be used. In addition, in the present embodiments a manually operated handle is illustrated attached to a lever shaft 116 to move cam 200. However, in other embodiments, a button or switch may be used to automatically operate electro-mechanical elements such as the linear or rotary actuators noted above to move the storage tank above, and out of contact with, the scale system 180.

As for the internal components of refrigerant recovery and delivery unit 100, the tank plate 190, base plate 192, frame 170, frame reinforcement 172, and lever 150 may comprise galvanized sheet metal, which in some cases may be 1/8 inch thick or more. Other materials may also be used. The handle 110 may be made of galvanized steel and the lever shaft 116 may be made of 35SMnPb10 steel, although other materials may be used. Cam 200 and cam stop 202 (also referred to as a cam plate) may be made of aluminum, although other materials may be used.

The base plate may be secured to frame 170 and/or frame reinforcement 172 with any suitable fastener such as bolts, and the frame reinforcement 172 of frame 170 may also be secured to frame 170 with any suitable fastener such as bolts.

In some embodiments, the storage tank 160 can also be detachable and/or interchangeable by a user of refrigerant recovery and delivery unit 100. Further, the storage tank 160 can include a level indicator that displays to a user of the refrigerant recovery and delivery unit 100 how much of the storage tank 160 is filled with fluid (*e.g.,* in case the load cell of scale system 180 is not functioning properly) and/or when the storage tank 160 needs to be replaced/changed. Further, the storage tank 160 can include a temperature probe. The temperature probe could have an analog or digital display that is legible by users of the refrigerant recovery and delivery unit 100, in some embodiments. Additionally or alternatively, the temperature probe could transmit temperature measurements to a control system within the refrigerant recovery and delivery unit 100. The temperature within the storage tank 160 can indicate whether refrigerant within the storage tank 160 is in a gaseous or a liquid state.

Further, the storage tank 160 can have nozzle and/or hose attachments configured to attach the storage tank 160 to other components. For example, the storage tank 160 can be attachable to a vehicle or to other components within a refrigerant recovery and delivery unit. In some embodiments, the storage tank 160 will have a manometer attached to measure pressure within the storage tank 160.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the claims, along with the full scope of equivalents to which such claims are entitled. It is also to be understood that the terminology used herein is for the purpose of describing particular embodiments only, and is not intended to be limiting.

## Claims

1. An apparatus, comprising:
a storage tank (160);
a frame (170) positioned at least partially beneath the storage tank (160); and
a scale system (180) positioned beneath the storage tank (160); and a cam (200);
wherein in a first position, the storage tank (160) exerts a force against the scale system (180), and in a second position the storage tank (160) is positioned above, and out of contact with, the scale system (180);
**characterized in that**:
a lever (150) comprising a lever shaft (116) and having a first end and a second end is pivotally mounted to the frame (170);
wherein the cam (200) is rotatable to engage the first end (154) of the lever (150) to move the storage tank (160) from the first position to the second position, and in the second position the second end (152) of the lever (150) exerts a force on a bottom of the storage tank (160) such that the storage tank (160) is positioned above, and out of contact with, the scale system (180); and
wherein the cam (200) comprises a cylindrical member which is attached to the lever shaft (116) and wherein the lever shaft (116) is offset from a centerline of the cylindrical member.

2. The apparatus of claim 1, wherein the storage tank (160) is configured to store refrigerant.

3. The apparatus of claim 1 or 2, wherein the scale system (180) is a load cell.

4. The apparatus of any of claims 1-3, wherein at least one of the following applies:
a tank plate is secured to the bottom of the storage tank (160), and in the second position, the second end (152) of the lever (150) exerts a force against a bottom surface of the tank plate (160);
the frame (170) comprises a frame reinforcement (172), and the lever (150) is pivotally mounted to the frame reinforcement (172);
a base plate (192) is positioned above the frame (170).

5. The apparatus of any of claims 1-4, wherein the second end (152) of the lever (150) includes a pair of upwardly extending flanges (152a, 152b) adapted to exert a force against the bottom of the storage tank (160) when the storage tank (160) is in the second position,
wherein exposed ends of the pair of upwardly extending flanges (152a, 152b) preferably extend through slots (170a, 170b) in the frame (170) when the storage tank (160) is in the second position, wherein the exposed ends of the pair of upwardly extending flanges (152a, 152b) more preferably extend through a frame reinforcement (172) that is part of the frame (170) when the storage tank (170) is in the second position.

6. The apparatus of any of claims 1-5, wherein the cam (200) is rotatable by a user operated handle (110) attached to the lever shaft (116).

7. The apparatus of any of claims 1-6, wherein at least one of the following applies:
the cam is rotatable by a user operated handle attached to the lever shaft;
the cam includes a protuberance that engages the first end of the lever when the cam is rotated to move the storage tank from the first position to the second position;
the cam includes a recess adapted to receive a protrusion extending from the first end of the lever to lock the cam into a locked positioned when the storage tank is in the second position, wherein the protuberance preferably engages a portion of the frame to prevent further rotation of the cam when the storage tank is in the first position.

8. A method, comprising:
providing a storage tank (160), a frame (170) positioned at least partially beneath the storage tank (160), a scale system (180) positioned beneath the storage tank (160), and means for moving the storage tank (160) from a first position where the storage tank (160) exerts a force against the scale system (180) to a second position where the storage tank (160) is positioned above, and out of contact with, the scale system (180);
wherein the means for moving the storage tank (160) from the first position to the second position comprises a lever (150) comprising a lever shaft (116), which lever (150) is pivotally mounted to the frame (170) positioned beneath the storage tank (160), and wherein a cam (200) comprises a cylindrical member which is attached to the lever shaft (116) and wherein the lever shaft (116) is offset from a centerline of the cylindrical member, and wherein the cam (200) is rotatable to engage a first end of the lever (150) to move the storage tank (160) from the first position to the second position; and
moving the storage tank (160) from the first position wherein the storage tank (160) exerts a force on the scale system (180) to the second position where the storage tank (160) is positioned above, and out of contact with, the scale system (180) and the step of moving the storage tank (160) from the first position to the second position includes the step of rotating the cam (200) against the first end (154) of the lever (150) such that a second end (152) of the lever (150) exerts a force against a bottom surface of the storage tank (160) to lift the storage tank (160) above, and out of contact with, the scale system (180).

9. The method of claim 8, wherein step of providing the scale system (180) includes providing a load cell.

10. The method of claim 8 or 9, wherein the second end (152) of the lever (150) includes a pair of upwardly extending flanges (152a, 152b) exerting a force against the bottom of the storage tank (160) when the storage tank (160) is in the second position.

11. The method of claim 8, 9 or 10, wherein the cam (200) is rotatable by a user operated handle (110) attached to the lever shaft (116) during the step of moving the storage tank from the first position to the second position.

12. The method of any of claims 8-11, wherein the cam includes a protuberance, and further including the step of engaging the protuberance with the first end (154) of the lever (150), and further including the step of rotating the cam (200) to move the storage tank (160) from the first position to the second position, wherein the protuberance preferably engages a portion of the frame (170) to prevent further rotation of the cam (200) when the storage tank (160) is in the first position; and/or wherein the cam (200) includes a recess (200a) adapted to receive a protrusion (118) extending from the first end of the lever (150) to lock the cam (200) into a locked positioned when the storage tank (160) is in the second position.

## Patentansprüche

1. Vorrichtung, aufweisend:
einen Vorratsbehälter (160)
einen Rahmen (170), der zumindest teilweise unter dem Vorratsbehälter (160) angeordnet ist; und
ein Wägesystem (180), das unterhalb des Vorratsbehälter (160) angeordnet ist; und
einen Nocken (200);
wobei der Vorratsbehälter (160) in einer ersten Position eine Kraft gegen das Wägesystem (180) ausübt und in einer zweiten Position der Vorratsbehälter (160) oberhalb und außer Kontakt mit dem Wägesystem (180) positioniert ist;
**dadurch gekennzeichnet, dass**
ein Hebel (150), der eine Hebelwelle (116) umfasst und ein erstes Ende und ein zweites Ende aufweist, schwenkbar an dem Rahmen (170) angebracht ist;
wobei der Nocken (200) drehbar ist, um mit dem ersten Ende (154) des Hebels (150) in Eingriff zu kommen, um den Vorratsbehälter (160) von der ersten Position in die zweite Position zu bewegen, und in der zweiten Position das zweite Ende (152) des Hebels (150) eine Kraft auf einen Boden des Vorratsbehälters (160) ausübt, so dass der Vorratsbehälter (160) oberhalb und außer Kontakt mit dem Wägesystem (180) positioniert ist; und
wobei der Nocken (200) ein zylindrisches Element aufweist, das an der Hebelwelle (116) befestigt ist und wobei die Hebelwelle (116) von einer Mittellinie des zylindrischen Elements versetzt ist.

2. Vorrichtung nach Anspruch 1, wobei der Vorratsbehälter (160) zum Speichern von Kältemittel ausgebildet ist.

3. Vorrichtung nach Anspruch 1 oder 2, wobei das Wägesystem (180) eine Wägezelle ist.

4. Vorrichtung nach einem der Ansprüche 1 bis 3, wobei mindestens einer der folgenden Punkte zutrifft:
eine Behälterplatte ist am Boden des Vorratsbehälters (160) befestigt, und in der zweiten Position übt das zweite Ende (152) des Hebels (150) eine Kraft gegen eine Bodenfläche der Behälterplatte (160) aus;
der Rahmen (170) weist eine Rahmenverstärkung (172) auf, und der Hebel (150) ist schwenkbar an der Rahmenverstärkung (172) angebracht;
oberhalb des Rahmens (170) ist eine Grundplatte (192) angeordnet.

5. Vorrichtung nach einem der Ansprüche 1 bis 4, wobei das zweite Ende (152) des Hebels (150) ein Paar sich nach oben erstreckender Flansche (152a, 152b) aufweist, die geeignet sind, eine Kraft gegen den Boden des Vorratsbehälters (160) auszuüben, wenn sich der Vorratsbehälter (160) in der zweiten Position befindet,
wobei freiliegende Enden des Paares von sich nach oben erstreckenden Flanschen (152a, 152b) vorzugsweise sich durch Schlitze (170a, 170b) in dem Rahmen (170) erstrecken, wenn sich der Vorratsbehälter (160) in der zweiten Position befindet, wobei die freiliegenden Enden des Paares sich nach oben erstreckender Flansche (152a, 152b) sich vorzugsweise durch eine Rahmenverstärkung (172) erstrecken, die Teil des Rahmens (170) ist, wenn sich der Vorratsbehälter (160) in der zweiten Position befindet.

6. Vorrichtung nach einem der Ansprüche 1 bis 5, wobei der Nocken (200) durch einen von einem Benutzer bedienbaren Griff (110), der an der Hebelwelle (116) angebracht ist, drehbar ist.

7. Vorrichtung nach einem der Ansprüche 1 bis 6, wobei mindestens einer der folgenden Punkte zutrifft:
der Nocken ist durch einen von einem Benutzer bedienbaren Griff, der an der Hebelwelle befestigt ist, drehbar;
der Nocken enthält einen Vorsprung, der mit dem ersten Ende des Hebels in Eingriff kommt, wenn der Nocken gedreht wird, um den Vorratsbehälter von der ersten Position in die zweite Position zu bewegen;
der Nocken weist eine Aussparung auf, die geeignet ist, einen Vorsprung aufzunehmen, der sich von dem ersten Ende des Hebels erstreckt, um den Nocken in eine verriegelte Position zu verriegeln, wenn sich der Vorratsbehälter in der zweiten Position befindet, wobei der Vorsprung vorzugsweise mit einem Teil des Rahmens in Eingriff steht, um eine weitere Drehung des Nockens zu verhindern, wenn sich der Vorratsbehälter in der ersten Position befindet.

8. Verfahren, aufweisend die folgenden Schritte:
Bereitstellen eines Vorratsbehälters (160), eines Rahmens (170), der zumindest teilweise unter dem Vorratsbehälter (160) positioniert ist, eines Wägesystems (180), das unter dem Vorratsbehälter (160) positioniert ist, und einer Einrichtung zum Bewegen des Vorratsbehälters (160) von einer ersten Position, in der der Vorratsbehälter (160) eine Kraft gegen das Wägesystem (180) ausübt, in eine zweite Position, in der der Vorratsbehälter (160) über dem Wägesystem (180) positioniert ist und außer Kontakt mit diesem steht;
wobei die Einrichtung zum Bewegen des Vorratsbehälters (160) von der ersten Position in die zweite Position einen Hebel (150) mit einer Hebelwelle (116) umfasst, wobei der Hebel (150) schwenkbar an dem unterhalb des Vorratsbehälters (160) positionierten Rahmen (170) angebracht ist, und wobei ein Nocken (200) ein zylindrisches Element umfasst, das an der Hebelwelle (116) angebracht ist, und wobei die Hebelwelle (116) gegenüber einer Hebelwelle (116) von einer Mittellinie des zylindrischen Elements versetzt ist, und wobei der Nocken (200) drehbar ist, um mit einem ersten Ende des Hebels (150) in Eingriff zu kommen, um den Vorratsbehälter (160) von der ersten Position in die zweite Position zu bewegen; und
Bewegen des Vorratsbehälters (160) von der ersten Position, in der der Vorratsbehälter (160) eine Kraft auf das Wägesystem (180) ausübt, in die zweite Position, in der der Vorratsbehälter (160) oberhalb und außer Kontakt mit dem Wägesystem (180) positioniert ist, und der Schritt des Bewegens des Vorratsbehälters (160) von der ersten Position in die zweite Position den Schritt des Drehens des Nockens (200) gegen das erste Ende (154) des Hebels (200) umfasst, so dass ein zweites Ende (152) des Hebels (150) eine Kraft gegen eine Bodenfläche des Vorratsbehälters (160) ausübt, um den Vorratsbehälter (160) über und aus dem Kontakt mit dem Wägesystem (180) zu heben.

9. Verfahren nach Anspruch 8, wobei der Schritt des Bereitstellens des Wägesystems (180) das Bereitstellen einer Wägezelle umfasst.

10. Verfahren nach Anspruch 8 oder 9, wobei das zweite Ende (152) des Hebels (150) ein Paar von sich nach oben erstreckenden Flanschen (152a, 152b) aufweist, die
eine Kraft gegen den Boden des Vorratsbehälters (160) ausübt, wenn sich der Vorratsbehälter (160) in der zweiten Position befindet.

11. Verfahren nach Anspruch 8, 9 oder 10, wobei der Nocken (200), während des Schritts des Bewegens des Vorratsbehälters von der ersten Position in die zweite Position, durch einen von einem Benutzer bedienbaren Griff (110), der an der Hebelwelle (116) befestigt ist, drehbar ist.

12. Verfahren nach einem der Ansprüche 8 bis 11, wobei der Nocken einen Vorsprung aufweist, und wobei das Verfahren ferner den Schritt des In-Eingriff-Bringens des Vorsprungs mit dem ersten Ende (154) des Hebels (150) und ferner den Schritt des Drehens des Nockens (200) aufweist, um den Vorratsbehälter (160) von der ersten Position in die zweite Position zu bewegen, wobei der Vorsprung vorzugsweise mit einem Abschnitt des Rahmens (170) in Eingriff steht, um eine weitere Drehung des Nockens (200) zu verhindern, wenn sich der Vorratsbehälter (160) in der ersten Position befindet; und/oder wobei der Nocken (200) eine Ausnehmung (200a) aufweist, die dazu geeignet ist, einen Vorsprung (118) aufzunehmen, der sich von dem ersten Ende des Hebels (150) erstreckt, um den Nocken (200) in eine verriegelte Position zu verriegeln, wenn sich der Vorratsbehälter (160) in der zweiten Position befindet.

## Revendications

1. Dispositif, comprenant :
un réservoir de stockage (160) ;
un bâti (170) positionné au moins partiellement au-dessous du réservoir de stockage (160) ; et
un dispositif de pesage (180) positionné au-dessous du réservoir de stockage (160) ; et une came (200) ;
dans lequel, dans une première position, le réservoir de stockage (160) exerce un effort contre le dispositif de pesage (180) et, dans une seconde position, le réservoir de stockage (160) est positionné au-dessus du dispositif de pesage (180) et non en contact avec ce dernier ;
**caractérisé en ce que** :
un levier (150) comprenant un arbre de levier (116) et présentant une première extrémité et une seconde extrémité est monté de manière à pouvoir pivoter sur le bâti (170) ;
dans lequel la came (200) peut tourner de manière à se coupler à la première extrémité (154) du levier (150) afin de déplacer le réservoir de stockage (160) à partir de la première position vers la seconde position et, dans la seconde position, la seconde extrémité (152) du levier (150) exerce un effort sur une partie inférieure du réservoir de stockage (160) de telle sorte que le réservoir de stockage (160) est positionné au-dessus du dispositif de pesage (180) et non en contact avec ce dernier ; et
dans lequel la came (200) comprend un élément cylindrique qui est fixé sur l'arbre de levier (116) et dans lequel l'arbre de levier (116) est décalé par rapport à la ligne d'axe de l'élément cylindrique.

2. Dispositif selon la revendication 1, dans lequel le réservoir de stockage (160) est configuré de manière à stocker du réfrigérant.

3. Dispositif selon la revendication 1 ou 2, dans lequel le dispositif de pesage (180) est une unité de chargement.

4. Dispositif selon l'une quelconque des revendications 1 à 3, dans lequel au moins l'une des conditions suivantes s'applique :
une plaque de réservoir est fixée sur la partie inférieure du réservoir de stockage (160) et, dans la seconde position, la seconde extrémité (152) du levier (150) exerce un effort contre la surface inférieure du réservoir (160) ;
le bâti (170) comprend un élément de renforcement de bâti (172) et le levier (150) est monté de manière à pouvoir pivoter sur l'élément de renforcement de bâti (172) ;
une plaque de base (192) est positionnée au-dessus du bâti (170).

5. Dispositif selon l'une quelconque des revendications 1 à 4, dans lequel la seconde extrémité (152) du levier (150) comporte une paire de brides s'étendant vers le haut (152a, 152b) adaptées de manière à exercer un effort contre la partie inférieure du réservoir de stockage (160) lorsque le réservoir de stockage (160) est dans la seconde position,
dans lequel des extrémités exposées de la paire de brides s'étendant vers le haut (152a, 152b) s'étendent, de préférence, à travers des fentes (170a, 170b) sur le bâti (170) lorsque le réservoir de stockage (160) est dans la seconde position, dans lequel les extrémités exposées de la paire de brides s'étendant vers le haut (152a, 152b) s'étendent, plus préférablement, à travers un élément de renforcement de bâti (172) qui est une partie du bâti (170) lorsque le réservoir de stockage (170) est dans la seconde position.

6. Dispositif selon l'une quelconque des revendications 1 à 5, dans lequel la came (200) peut être amenée à tourner avec une poignée commandée par l'utilisateur (110) fixée sur l'arbre de levier (116).

7. Dispositif selon l'une quelconque des revendications 1 à 6, dans lequel au moins l'une des conditions suivantes s'applique :
la came peut être amenée à tourner avec une poignée commandée par l'utilisateur, fixée sur l'arbre de levier ;
la came comporte une saillie qui est couplée à la première extrémité du levier lorsque la came est tournée afin de déplacer le réservoir de stockage à partir de la première position vers la seconde position ;
la came comporte une cavité adaptée afin de recevoir une saillie s'étendant à partir de la première extrémité du levier afin de verrouiller la came dans la position verrouillée lorsque le réservoir de stockage est dans la seconde position, dans lequel la saillie est, de préférence, couplée à une partie du bâti afin d'empêcher une rotation supplémentaire de la came lorsque le réservoir de stockage est dans la première position.

8. Procédé, comprenant :
la préparation d'un réservoir de stockage (160), un bâti (170) étant positionné au moins partiellement au-dessous du réservoir de stockage (160), un dispositif de pesage (180) étant positionné au-dessous du réservoir de stockage (160), et des moyens destinés à déplacer le réservoir de stockage (160) à partir d'une première position dans laquelle le réservoir de stockage (160) exerce un effort contre le dispositif de pesage (180) vers une seconde position dans laquelle le réservoir de stockage (160) est positionné au-dessus du dispositif de pesage (180) et non en contact avec ce dernier ;
dans lequel le moyen destiné à déplacer le réservoir de stockage (160) à partir de la première position vers la seconde position comprend un levier (150) comprenant un arbre de levier (116), lequel levier (150) est monté de manière à pouvoir pivoter sur le bâti (170) positionné au-dessous du réservoir de stockage (160), et dans lequel une came (200) comprend un élément cylindrique qui est fixé sur l'arbre de levier (116) et dans lequel l'arbre de levier (116) est décalé par rapport à une ligne d'axe de l'élément cylindrique, et dans lequel la came (200) peut tourner afin de se coupler à une première extrémité du levier (150) de manière à déplacer le réservoir de stockage (160) à partir de la première position vers la seconde position ; et
le déplacement du réservoir de stockage (160) à partir de la première position dans laquelle le réservoir de stockage (160) exerce un effort sur le dispositif de pesage (180) vers la seconde position dans laquelle le réservoir de stockage (160) est positionné au-dessus du dispositif de pesage (180) et non en contact avec ce dernier, et l'étape de déplacement du réservoir de stockage (160) à partir de la première position vers la seconde position comporte l'étape de rotation de la came (200) contre la première extrémité (154) du levier (150) de telle sorte qu'une seconde extrémité (152) du levier (150) exerce un effort contre une surface inférieure du réservoir de stockage (160) afin de soulever le réservoir de stockage (160) au dessus du dispositif de pesage (180), et non en contact avec ce dernier.

9. Procédé selon la revendication 8, dans lequel l'étape d'agencement du dispositif de pesage (180) comporte l'agencement d'une unité de chargement.

10. Procédé selon la revendication 8 ou 9, dans lequel la seconde extrémité (152) du levier (150) comporte une paire de brides s'étendant vers le haut (152a, 152b) exerçant un effort contre la partie inférieure du réservoir de stockage (160) lorsque le réservoir de stockage (160) est dans la seconde position.

11. Procédé selon la revendication 8, 9 ou 10, dans lequel la came (200) peut être tournée par la poignée commandée par l'utilisateur (110) fixée sur l'arbre de levier (116) au cours de l'étape de déplacement du réservoir de stockage à partir de la première position vers la seconde position.

12. Procédé selon l'une quelconque des revendications 8 à 11, dans lequel la came comporte une saillie, et comportant, en outre, l'étape de couplage de la saillie avec la première extrémité (154) du levier (150), et comportant, en outre, l'étape de rotation de la came (200) afin de déplacer le réservoir de stockage (160) à partir de la première position vers la seconde position, dans lequel la saillie se couple, de préférence, à une partie du bâti (170) afin d'empêcher une rotation supplémentaire de la came (200) lorsque le réservoir de stockage (160) est dans la première position ; et/ou dans lequel la came (200) comporte une cavité (200a) adaptée de manière à recevoir une saillie (118) s'étendant à partir de la première extrémité du levier (150) afin de verrouiller la came (200) dans une position verrouillée lorsque le réservoir de stockage (160) est dans la seconde position.
